(19) Europäisches Patentamt
European Patent Office
Office européen des brevets

(11) EP 3 059 292 B1

(12) **FASCICULE DE BREVET EUROPEEN**

(45) Date de publication et mention de la délivrance du brevet:
**20.11.2024 Bulletin 2024/47**

(21) Numéro de dépôt: **16162759.1**

(22) Date de dépôt: **17.08.2010**

(51) Classification Internationale des Brevets (IPC):
**C09K 5/04** $^{(2006.01)}$ **F25B 9/00** $^{(2006.01)}$

(52) Classification Coopérative des Brevets (CPC):
**C09K 5/045;** C09K 2205/126; C09K 2205/22; F25B 9/006

(54) **REFRIGERATION BASSE ET MOYENNE TEMPERATURE**

TIEFKÜHLUNG UND NORMALKÜHLUNG

LOW- AND MEDIUM-TEMPERATURE REFRIGERATION

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **11.09.2009 FR 0956242**

(43) Date de publication de la demande:
**24.08.2016 Bulletin 2016/34**

(62) Numéro(s) de document de la (des) demande(s) initiale(s) en application de l'article 76 CBE:
**10762990.9 / 2 475 735**

(73) Titulaire: **ARKEMA FRANCE**
**92700 Colombes (FR)**

(72) Inventeur: **RACHED, Wissam**
**69630 Chaponost (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**WO-A1-2009/107364 FR-A1- 2 256 381**
**FR-A3- 2 182 956 US-A1- 2006 243 944**
**US-A1- 2008 314 073**

- **EXCERPT FROM THE ROMPP CHEMISTRY ENCYCLOPEDIA, 10TH EDITION (1996) FOR THE KEYWORD "BINARY SYSTEMS"., 1 January 1996, pages: 432**
- **EXCERPT FROM THE TEXTBOOK BAEHR, H.D. AND STEPHAN, K.: HEAT AND MASS TRANSFER, SPRINGER (2006), PAGES 40 TO 57., 1 January 2006**

**EP 3 059 292 B1**

**Description**

La présente invention concerne l'utilisation des compositions binaire du 2,3,3,3-tetrafluoropropène et du difluorométhane comme fluides de transfert de chaleur.

Les problèmes posés par les substances appauvrissant la couche d'ozone atmosphérique (ODP : ozone déplétion potential) ont été traités à Montréal où a été signé le protocole imposant une réduction de la production et de l'utilisation des chlorofluorocarbures (CFC). Ce protocole a fait l'objet d'amendements qui ont imposé l'abandon des CFC et étendu la réglementation à d'autres produits, dont les hydrochlorofluorocarbones (HCFC).

L'industrie de la réfrigération et de la production d'air conditionné a beaucoup investi dans la substitution de ces fluides frigorigènes et c'est ainsi que les hydrofluorocarbures (HFC) ont été commercialisés.

Dans l'industrie automobile, les systèmes de climatisation des véhicules commercialisés dans de nombreux pays sont passés d'un fluide frigorigène au chlorofluorocarbure (CFC-12) à celui de l'hydrofluorocarbure (1,1,1,2 tetrafluoroéthane : HFC-134a), moins nocif pour la couche d'ozone. Cependant, au regard des objectifs fixés par le protocole de Kyoto, le HFC-134a (GWP = 1300) est considéré comme ayant un pouvoir de réchauffement élevé. La contribution à l'effet de serre d'un fluide est quantifiée par un critère, le GWP (Global Warming Potentiels) qui résume le pouvoir de réchauffement en prenant une valeur de référence de 1 pour le dioxyde de carbone.

Le dioxyde de carbone étant non-toxique, ininflammable et ayant un très faible GWP, a été proposé comme fluide frigorigène pour les systèmes de climatisation en remplacement du HFC-134a. Toutefois, l'emploi du dioxyde de carbone présente plusieurs inconvénients, notamment liés à la pression très élevée de sa mise en oeuvre en tant que fluide frigorigène dans les appareils et technologies existants.

Par ailleurs, le mélange R-404A constitué de 44 % en poids de pentafluoroéthane, 52 % en poids de trifluoroéthane et 4 % en poids de HFC-134a est largement utilisé comme fluide de réfrigération de grandes surfaces (supermarché) et dans les transports frigorifiques. Ce mélange a toutefois un GWP de 3900.

Le document JP 4110388 décrit l'utilisation des hydrofluoropropènes de formule $C_3H_mF_n$, avec m, n représentant un nombre entier compris entre 1 et 5 inclus et m + n = 6, comme fluides de transfert de chaleur, en particulier le tetrafluoropropène et le trifluoropropène.

Le document WO2004/037913 divulgue l'utilisation des compositions comprenant au moins un fluoroalcène ayant trois ou quatre atomes de carbone, notamment le pentafluoropropène et le tetrafluoropropène, de préférence ayant un GWP au plus de 150, comme fluides de transfert de chaleur.

Le document WO 2006/094303 (US 2006/243944) divulgue une composition azéotropique contenant 7,4 % en poids du 2,3,3,3 tetrafluoropropène (HFO-1234yf) et 92,6 % en poids du difluorométhane (HFC-32). Ce document divulgue également des compositions quasi-azéotropiques contenant de 1 à 57 % en poids du 2,3,3,3 tetrafluoropropène et de 43 à 99 % en poids du difluorométhane .

Le document US 2008/314073 décrit une méthode pour détecter des fuites dans un systemè de transfert de chaleur à boucle fermée.

Le document WO 2009/107364 décrit un système de réfrigération, apte à opérer comme un cycle de réfrigération mettant en jeu une composition de 77-79% en poids de 2,3,3,3 tetrafluoropropène (HFO-1234yf) et de 21-23 % en poids du difluorométhane (HFC-32).

Le document FR 2182956 concerne un échangeur de chaleur à contre-courant croisé.

Le document FR 2256381 se rapporte à un dispositif de transmission de chaleur mettant en jeu comportant un compresseur, un condenseur et un évaporateur branchés en circuit fermé et dans lequel circule un fluide de transfert de chaleur.

Un échangeur de chaleur est un dispositif permettant de transférer de l'énergie thermique d'un fluide vers un autre, sans les mélanger. Le flux thermique traverse la surface d'échange qui sépare les fluides. La plupart du temps on utilise cette méthode pour refroidir ou réchauffer un liquide ou un gaz qu'il est impossible de refroidir ou chauffer directement.

Dans les systèmes à compression, l'échange thermique entre le fluide frigorigène et les sources de chaleur s'effectue par l'intermédiaire des fluides caloporteurs. Ces fluides caloporteurs sont à l'état gazeux ( l'air dans l'air conditionné et la réfrigération à détente directe), liquide ( l'eau dans les pompes à chaleur domestique, l'eau glycolée) ou diphasique.

Il existe différents modes de transfert :

- les deux fluides sont disposés parallèlement et vont dans le même sens : mode à co-courant (antiméthodique);
- les deux fluides sont disposés parallèlement mais vont dans le sens opposé: mode à contre-courant (méthodique);
- les deux fluides sont positionnés perpendiculairement : mode à courant croisé. Le courant croisé peut être à tendance co-courant ou contre-courant ;
- un des deux fluides fait un demi-tour dans un conduit plus large, que le deuxième fluide traverse. Cette configuration est comparable à un échangeur à co-courant sur la moitié de la longueur, et pour l'autre moitié à un échangeur à contre courant : mode à tête d'épingle .

La demanderesse a maintenant découvert que des compositions binaires du 2,3,3,3-tetrafluoropropène et du difluorométhane sont particulièrement intéressantes comme fluide de transfert de chaleur dans des systèmes de transfert de chaleur à compression, avec échangeurs opérant en mode contre-courant ou en mode courant croisé à tendance contre-courant, en remplacement du R-404A ou du R-407C.

Ainsi, ces compositions peuvent être utilisées comme fluide de transfert de chaleur dans la réfrigération des véhicules frigorifiques, dans la conservation des aliments et dans l'industrie ( chimique, alimentaire etc ) avec des échangeurs en mode contre-courant ou en mode courant croisé à tendance contre-courant.

Un premier objet de la présente invention concerne l'utilisation des compositions binaires du 2,3,3,3-tetrafluoropropène et du difluorométhane comme fluide de transfert de chaleur dans des systèmes à compression pour la réfrigération basse et moyenne température, avec des échangeurs opérant en mode contre-courant ou en mode courant croisé à tendance contre-courant.

On entend par réfrigération basse et moyenne température, l'intervalle de - 45°C à -10°C à l'évaporateur.

De préférence, les compositions binaires du 2,3,3,3 tetrafluoropropène et du difluorométhane contiennent essentiellement de 61 à 85 % en poids du 2,3,3,3-tetrafluoropropène et de 15 à 39 % en poids du difluorométhane.

Avantageusement, les compositions binaires contiennent essentiellement de 70 à 79 % en poids du 2,3,3,3 tetrafluoropropène et de 21 à 30 % en poids du difluorométhane.

Les compositions binaires utilisées dans la présente invention ont à la fois un ODP nul et un faible GWP.. Le coefficient de performance (COP: le rapport entre la puissance froide et la consommation électrique d'un réfrigérateur) de ces compositions binaires dans des échangeurs en mode à contre-courant, est plus élevée que les compositions utilisées actuellement en réfrigération basse et moyenne température. Compte-tenu du niveau de pression au condenseur, il n'est pas nécessaire de développer de nouveaux compresseurs ; les compresseurs existant sur le marché peuvent convenir.

Les compositions binaires utilisées dans la présente invention peuvent remplacer le R-404A et R-407C ( mélange ternaire contenant 52 % en poids du HFC-134a, 25 % en poids du pentafluoroethane et 23 % en poids de difluoromethane) dans des systèmes de transfert de chaleur à compression avec échangeurs opérant en mode contre-courant ou en mode courant croisé à tendance contre-courant.

Les compositions binaires mises en oeuvre selon la présente invention peuvent être stabilisées. La quantité de stabilisant représente de préférence au plus 5 % en poids par rapport à la composition binaire.

Comme stabilisants, on peut citer notamment le nitromethane, l'acide ascorbique, l'acide terephtalique, les azoles tels que le tolutriazole ou le benzotriazole, les composés phénoliques tels que le tocopherol, l'hydroquinone, le t-butyl hydroquinone, le 2,6-di-ter-butyl-4-methylphenol, les epoxydes (alkyl éventuellement fluoré ou perfluoré ou alkenyl ou aromatique) tels que les n-butyl glycidyl ether, hexanediol diglycidyl ether, allyl glycidyl ether, butylphenylglycidyl ether, les phosphites, les phosphates, les phosphonates, les thiols et lactones.

Un deuxième objet de la présente invention concerne un procédé de transfert de chaleur dans des systèmes à compression pour la réfrigération, basse et moyenne température, dans lequel on utilise les compositions binaires du 2,3,3,3 tetrafluoropropène et du difluorométhane, telles que définies ci-dessus, comme fluide frigorigène avec des échangeurs opérant en mode contre-courant ou en mode courant croisé à tendance contre-courant.

Le procédé selon la présente invention peut être mis en oeuvre en présence des lubrifiants tels que l'huile minérale, alkylbenzène, le polyalkylène glycol, polyol ester et le polyvinyl éther.

PARTIE EXPERIMENTALE

**Outils de calcul**

L'équation RK-Soave est utilisée pour le calcul des densités, enthalpies, entropies et les données d'équilibre liquide vapeur des mélanges. L'utilisation de cette équation nécessite la connaissance des propriétés des corps purs utilisés dans les mélanges en question et aussi les coefficients d'interaction pour chaque binaire.

Les données nécessaires pour chaque corps pur sont:
Température d'ébullition, Température et pression critique, la courbe de pression en fonction de la température à partir du point d'ébullition jusqu'au point critique, les densités liquide saturée et vapeur saturée en fonction de la température.

*HFC-32:*

Les données sur HFC-32 sont publiées dans l'ASHRAE Handbook 2005 chapitre 20, et sont aussi disponible sous Refrop (Logiciel développé par NIST pour le calcul des propriétés des fluides frigorigènes)

*HFO-1234yf:*

Les données de la courbe température-pression du HFO-1234yf sont mesurées par la méthode statique. La température et pression critique sont mesurées par un calorimètre C80 commercialisé par Setaram. Les densités, à saturation en fonction de la température, sont mesurées par la technologie du densimètre à tube vibrant développer par les laboratoires de l'école des Mines de Paris.

*Coefficient d'interaction binaire du HFC-32 / HFO-1234yf:*

L'équation RK-Soave utilise des coefficients d'interaction binaire pour représenter le comportement des produits en mélanges. Les coefficients sont calculés en fonction des données expérimentales d'équilibre liquide vapeur.

La technique utilisée pour les mesures d'équilibre liquide vapeur est la méthode de cellule statique analytique. La cellule d'équilibre comprend un tube saphir et est équipée de deux échantillonneurs ROLSITM électromagnétiques. Elle est immergée dans un bain cryothermostat (HUBER HS40). Une agitation magnétique à entraînement par champ tournant à vitesse variable est utilisée pour accélérer l'atteinte des équilibres. L'analyse des échantillons est effectuée par chromatographie (HP5890 seriesII) en phase gazeuse utilisant un catharomètre (TCD).

Les mesures d'équilibre liquide vapeur sur le binaire HFC-32 / HFO-1234yf sont réalisées pour les isothermes suivantes : -10°C, 30°C et 70°C

## Système à compression

Considérons un système à compression équipé d'un évaporateur et condenseur à contre-courant, d'un compresseur à vis et d'un détendeur.

Le système fonctionne avec 15°C de surchauffe et 5°C de sous refroidissement. L'écart de température minimum entre le fluide secondaire et le fluide frigorigène est considéré de l'ordre de 5°C.

Le rendement isentropique des compresseurs est fonction du taux de compression. Ce rendement est calculé suivant l'équation suivante:

$$\eta_{isen} = a - b(\tau - c)^2 - \frac{d}{\tau - e} \tag{1}$$

Pour un compresseur à vis, les constantes a, b, c, d et e de l'équation (1) du rendement isentropique sont calculées suivant les données types publiées dans le Handbook "Handbook of air conditioning and réfrigération, page 11.52".

Le coefficient de performance (COP) est défini, comme étant la puissance utile fournie par le système sur la puissance apportée ou consommée par le système.

Le coefficient de performance de Lorenz (COPLorenz) est un coefficient de performance de référence. Il est fonction de températures et est utilisé pour comparer les COP des différents fluides.

Le coefficient de performance de Lorenz est défini comme suit:

(Les températures T sont en K)

$$T_{moyenne}^{condenseur} = T_{entrée}^{condenseur} - T_{sortie}^{condenseur} \tag{2}$$

$$T_{moyenne}^{évaporateur} = T_{sortie}^{évaporateur} - T_{entrée}^{évaporateur} \tag{3}$$

Le COP de Lorenz dans le cas de l'air conditionnée et réfrigération:

$$COPlorenz = \frac{T_{moyenne}^{évaporateur}}{T_{moyenne}^{condenseur} - T_{moyenne}^{évaporateur}} \tag{4}$$

Le COP de Lorenz dans le cas de chauffage:

$$COPlorenz = \frac{T_{moyenne}^{condenseur}}{T_{moyenne}^{condenseur} - T_{moyenne}^{\acute{e}vaporateur}} \qquad (5)$$

Pour chaque composition, le coefficient de performance du cycle de Lorenz est calculé en fonction des températures correspondantes
Le %COP/COPLorenz est le rapport du COP du système par rapport au COP du cycle de Lorenz correspondant.

Résultats mode réfrigération basse température

En mode basse température, le système à compression fonctionne entre une température d'entrée du fluide frigorigène à l'évaporateur de -30°C et une température d'entrée du fluide frigorigène au condenseur de 40°C. Le système fournit du froid à -25°C.

Les performances des compositions selon l'invention dans les conditions de fonctionnement basse température sont données dans le Tableau 1. Les valeurs des constituants (HFO-1234yf, HFC-32) pour chaque composition sont données en pourcentage en poids.

Tableau 1

| | | Temp sortie évap (°C) | Temp sortie comp (°C) | T sortie cond (°C) | évap P (bar) | cond P (bar) | Taux (p/p) | Glide | rendement comp | % COP / COPLorenz |
|---|---|---|---|---|---|---|---|---|---|---|
| **R404A** | | -30 | 100 | 40 | 2,1 | 18,1 | 8,8 | 0,45 | 53,8 | 31,8 |
| **HFO-1234yf** | **HFC-32** | | | | | | | | | |
| 80 | 20 | -25 | 102 | 32 | 1,7 | 13,8 | 8,2 | 4,98 | 58,4 | 39,3 |
| 79 | 21 | -25 | 102 | 32 | 1,7 | 14,0 | 8,2 | 5,06 | 58,7 | 39,6 |
| 78 | 22 | -25 | 103 | 32 | 1,7 | 14,2 | 8,1 | 5,13 | 59,0 | 39,8 |
| 77 | 23 | -25 | 103 | 32 | 1,8 | 14,4 | 8,1 | 5,19 | 59,2 | 40,0 |
| 76 | 24 | -25 | 104 | 32 | 1,8 | 14,6 | 8,1 | 5,23 | 59,4 | 40,1 |
| 75 | 25 | -25 | 104 | 33 | 1,8 | 14,8 | 8,1 | 5,25 | 59,6 | 40,3 |
| 74 | 26 | -25 | 105 | 33 | 1,9 | 15,0 | 8,0 | 5,26 | 59,7 | 40,4 |
| 73 | 27 | -25 | 106 | 33 | 1,9 | 15,2 | 8,0 | 5,26 | 59,8 | 40,4 |
| 72 | 28 | -25 | 107 | 33 | 1,9 | 15,4 | 8,0 | 5,24 | 59,9 | 40,5 |
| 71 | 29 | -25 | 108 | 33 | 2,0 | 15,6 | 8,0 | 5,21 | 60,0 | 40,5 |
| 70 | 30 | -25 | 108 | 33 | 2,0 | 15,8 | 8,0 | 5,17 | 60,0 | 40,5 |
| 65 | 35 | -25 | 114 | 34 | 2,1 | 16,8 | 8,0 | 4,84 | 59,8 | 40,3 |
| 61 | 39 | -26 | 118 | 34 | 2,2 | 17,6 | 8,1 | 4,45 | 59,3 | 40,0 |

Résultats mode réfrigération moyenne température

En mode moyenne température, le système à compression fonctionne entre une température d'entrée du fluide frigorigène à l'évaporateur de -15°C et une température d'entrée du fluide frigorigène au condenseur de 35°C. Le système fournit du froid à -10°C.

Les performances des compositions binaires dans les conditions de fonctionnement moyenne température sont données dans le Tableau 2. Les valeurs des constituants (HFO-1234yf, HFC-32) pour chaque composition sont données en pourcentage en poids.

## Tableau 2

| | | Temp sortie évap (°C) | Temp sortie comp (°C) | T sortie cond (°C) | évap P (bar) | cond P (bar) | Taux (p/p) | Glide | rendement comp | % COP / COPLorenz |
|---|---|---|---|---|---|---|---|---|---|---|
| R404A | | -15 | 62 | 35 | 3,7 | 16,0 | 4,4 | 0,46 | 79,9 | 54,9 |
| HFO-1234yf | HFC-32 | | | | | | | | | |
| 80 | 20 | -9 | 64 | 27 | 3,2 | 12,2 | 3,8 | 6,11 | 81,3 | 61,9 |
| 79 | 21 | -9 | 64 | 27 | 3,2 | 12,3 | 3,8 | 6,16 | 81,3 | 62,0 |
| 78 | 22 | -9 | 65 | 27 | 3,3 | 12,5 | 3,8 | 6,19 | 81,3 | 62,0 |
| 77 | 23 | -9 | 65 | 27 | 3,3 | 12,7 | 3,8 | 6,20 | 81,3 | 61,9 |
| 76 | 24 | -9 | 66 | 27 | 3,4 | 12,9 | 3,8 | 6,20 | 81,3 | 61,9 |
| 75 | 25 | -9 | 66 | 27 | 3,4 | 13,0 | 3,8 | 6,18 | 81,3 | 61,9 |
| 73 | 27 | -9 | 67 | 28 | 3,5 | 13,4 | 3,8 | 6,10 | 81,3 | 61,8 |
| 72 | 28 | -9 | 68 | 28 | 3,5 | 13,6 | 3,8 | 6,05 | 81,3 | 61,8 |
| 71 | 29 | -9 | 69 | 28 | 3,6 | 13,7 | 3,8 | 5,98 | 81,3 | 61,7 |
| 70 | 30 | -9 | 69 | 28 | 3,6 | 13,9 | 3,8 | 5,90 | 81,3 | 61,6 |

## Revendications

1. Utilisation d'une composition binaire contenant du 2,3,3,3-tétrafluoropropène et du difluorométhane, comme fluide de transfert de chaleur dans des systèmes de transfert de chaleur à compression, avec échangeurs opérant en mode contre-courant ou en mode courant croisé à tendance contre-courant, en remplacement du R-404A ou du R-407C.

2. Utilisation selon la revendication 1 **caractérisée en ce que** la composition contient essentiellement de 61 à 85 % en poids du 2,3,3,3-tétrafluoropropène et de 15 à 39 % en poids du difluorométhane.

3. Utilisation selon la revendication 1 **caractérisée en ce que** la composition contient essentiellement de 70 à 79 % en poids du 2,3,3,3-tétrafluoropropène et de 21 à 30 % en poids du difluorométhane.

4. Utilisation selon l'une quelconque des revendications 1 à 3 **caractérisée en ce que** la composition binaire est stabilisée, la quantité de stabilisant représentant de préférence au plus 5 % en poids par rapport à la composition binaire.

5. Utilisation selon l'une quelconque des revendications 1 à 4 **caractérisée en ce qu'**elle est mise en oeuvre en présence d'un lubrifiant.

6. Utilisation selon l'une quelconque des revendications 1 à 5, dans laquelle la composition binaire est utilisée en remplacement du R-404A.

7. Utilisation selon l'une quelconque des revendications 1 à 5, dans laquelle la composition binaire est utilisée en remplacement du R-407C.

## Patentansprüche

1. Verwendung einer binären Zusammensetzung, die 2,3,3,3-Tetrafluorpropen und Difluormethan enthält, als Wärmeübertragungsfluid in Kompressionswärmeübertragungssystemen mit Austauschern, die im Gegenstrom-Modus oder im Querstrom-Modus mit Gegenstrom-Tendenz arbeiten, als Ersatz von R-404A oder R-407C.

2. Verwendung nach Anspruch 1, **dadurch gekennzeichnet, dass** die Zusammensetzung im Wesentlichen 61 bis 85 Gew.-% 2,3,3,3-Tetrafluorpropen und 15 bis 39 Gew.-% Difluormethan enthält.

3. Verwendung nach Anspruch 1, **dadurch gekennzeichnet, dass** die Zusammensetzung im Wesentlichen 70 bis 79 Gew.-% 2,3,3,3-Tetrafluorpropen und 21 bis 30 Gew.-% Difluormethan enthält.

4. Verwendung nach einem der Ansprüche 1 bis 3, **dadurch gekennzeichnet, dass** die binäre Zusammensetzung stabilisiert ist, wobei die Menge an Stabilisator vorzugsweise höchstens 5 Gew.-%, bezogen auf die binäre Zusammensetzung, ausmacht.

5. Verwendung nach einem der Ansprüche 1 bis 4, **dadurch gekennzeichnet, dass** sie in Gegenwart eines Schmiermittels durchgeführt wird.

6. Verwendung nach einem der Ansprüche 1 bis 5, wobei die binäre Zusammensetzung als Ersatz für R-404A verwendet wird.

7. Verwendung nach einem der Ansprüche 1 bis 5, wobei die binäre Zusammensetzung als Ersatz für R-407C verwendet wird.


**Claims**

1. Use of a binary composition containing 2,3,3,3-tetrafluoropropene and difluoromethane as heat-transfer fluid in compression-type heat-transfer systems, with exchangers operating in countercurrent mode or in cross-current mode with a countercurrent tendency, as replacement for R-404A or R-407C.

2. Use according to Claim 1, **characterized in that** the composition contains essentially from 61% to 85% by weight of 2,3,3,3-tetrafluoropropene and from 15% to 39% by weight of difluoromethane.

3. Use according to Claim 1, **characterized in that** the composition contains essentially from 70% to 79% by weight of 2,3,3,3-tetrafluoropropene and from 21% to 30% by weight of difluoromethane.

4. Use according to any one of Claims 1 to 3, **characterized in that** the binary composition is stabilized, the amount of stabilizer preferably representing at most 5% by weight with respect to the binary composition.

5. Use according to any one of Claims 1 to 4, **characterized in that** it is carried out in the presence of a lubricant.

6. Use according to any one of Claims 1 to 5, in which the binary composition is used as replacement for R-404A.

7. Use according to any one of Claims 1 to 5, in which the binary composition is used as replacement for R-407C.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 4110388 B
- WO 2004037913 A
- WO 2006094303 A
- US 2006243944 A
- US 2008314073 A
- WO 2009107364 A
- FR 2182956
- FR 2256381